# FASCICULE DE BREVET EUROPEEN

(11) **EP 0 880 748 B1**
(45) Date de publication et mention de la délivrance du brevet: **07.11.2001**
(21) Numéro de dépôt: 97904496.3
(22) Date de dépôt: 05.02.1997
(51) Int. Cl.: G06F 17/60

(54) **PROCEDE D'EXPLOITATION D'UN ORDINATEUR GERANT DES ECHANGES D'INFORMATIONS ET PROCEDE D'ETABLISSEMENT DE FORMULAIRES**
VERFAHREN ZUR VERWENDUNG EINES COMPUTERS ZUM VERWALTEN DES INFORMATIONSAUSTAUSCHES ZUM ERSTELLEN VON FORMULAREN
METHOD FOR OPERATING A DATA COMMUNICATION MANAGEMENT COMPUTER, AND METHOD FOR DRAWING UP FORMS

(30) Priorité: 05.02.1996 FR 9601358; 09.08.1996 FR 9610066
(43) Date de publication de la demande: 02.12.1998
(73) Titulaire: Decamps, Viviane Renée, 95170 Deuilla-Barre (FR); Arnaud, Jean Pierre Alfred, F-95160 Montmorency (FR); Hautbergue, Bernard Marc, 94340 Joinville-le-Pont (FR)
(72) Inventeur: ARNAUD, Jean, Pierre, Alfred, F-95160 Montmorency (FR); HAUTBERGUE, Bernard, Marc, F-94340 Joinville-le-Pont (FR)
(74) Mandataire: Arnaud, Jean Pierre Alfred
(86) Numéro de dépôt international: FR9700231
(87) Numéro de publication internationale: WO9729442

(56) Documents cités:
- EP-A- 0 273 435
- EP-A- 0 438 020
- EP-A- 0 471 639
- EP-A- 0 654 746
- WO-A-93/00643

## Description

La présente invention concerne la transmission d'informations entre plusieurs programmes d'ordinateur, exécutés sur un même ordinateur ou sur plusieurs ordinateurs reliés en réseau, et un système d'exploitation d'ordinateur facilitant cette transmission d'informations. Elle concerne aussi un procédé mettant en oeuvre un tel système et permettant une gestion globale sans support spécifique (parfois appelée "paperless").

### Arrière-plan technologique

Comme on utilise plusieurs programmes d'application différents sur un même ordinateur ou sur plusieurs ordinateurs différents, notamment dans une architecture de type client-serveur, il est fréquent que des informations doivent être échangées entre plusieurs programmes d'ordinateur. Par exemple, le brevet européen EP-380 211 décrit de façon générale la communication d'informations entre des programmes d'ordinateur, et notamment entre des programmes d'application exécutés sur un seul ordinateur ou sur plusieurs ordinateurs. Selon ce document, le transfert d'informations entre des programmes comprend l'utilisation d'un programme distributeur qui forme des listes contenant des informations choisies d'échange, des codes d'information et une identification d'un programme d'application. Lorsque des données doivent être transférées entre plusieurs programmes d'application, un programme d'application expéditeur produit des informations avec un code correspondant d'information, les informations et le code sont transmis au programme distributeur qui les conserve dans une liste, et le programme effectue une comparaison du code d'information aux codes d'information de sa liste pour déterminer s'il existe un accord entre des codes d'information relatifs à plusieurs programmes d'application. Si la comparaison donne un résultat positif, le programme distributeur transmet les informations choisies à un second programme d'application identifié par le code d'information.

Pour qu'une telle opération puisse être effectuée, il faut que les informations choisies échangées entre un programme d'application et un autre soient compatibles, c'est-à-dire puissent être traitées par chacun des deux programmes d'application. A cet effet, soit les informations sont dans un format reconnu par les deux programmes d'application et qui peut être utilisé par le programme distributeur, soit les informations subissent une conversion de format avant d'être transmises au programme distributeur et après avoir été transmises par celui-ci au programme d'application destinataire.

Compte tenu de ces problèmes d'échange d'informations entre des programmes gérant des formats incompatibles, on utilise de plus en plus des formats compatibles à de nombreux programmes d'application. Par exemple, on utilise de plus en plus des formats de fichiers, c'est-à-dire de présentation d'informations, qui sont reconnus par un grand nombre de programmes d'application. Il existe ainsi, pour l'échange des documents, un format "PDF" ("Portable Document Format"), créé à l'initiative de la société Adobe, particulièrement utile dans le cas de documents composites. Il existe aussi, dans le cas des fichiers dédiés au stockage d'images en mode point, un format TIFF ("Tagged Image File Format") qui est reconnu par la très grande majorité des programmes d'application concernés.

Le système décrit dans le document précité ne concerne cependant pas l'échange de documents complets, mais seulement d'informations tirées des documents. Dans un système d'exploitation d'ordinateur, les "fichiers" représentent des documents, ces documents pouvant être de tout type (texte, graphique, image, son). Selon une définition connue, "un document est un véhicule d'informations intelligibles, riche dans son fond comme dans sa forme. Il est à la fois le message, sa forme, sa présentation et son véhicule".

Etant donné l'utilisation de plus en plus importante de ces documents à des formats reconnus par de nombreux programmes d'application, la reconnaissance de l'ensemble du document pose de moins en moins de problèmes. Cependant, l'échange de documents nécessite la connaissance de leur support qui est un "fichier informatique".

Dans les systèmes d'exploitation d'ordinateurs (qui ne jouent pas le rôle du programme distributeur de documents précité), un fichier est un ensemble informatique qui a un nom de fichier et un certain nombre d'attributs, notamment une date de création, un descripteur de sécurité (déterminant qui peut utiliser le fichier, ce qui peut être réalisé avec le fichier,...), et des attributs indiquant comment peut être utilisé le fichier (lecture seule, archivage, etc.) pendant des opérations gérées par le système d'exploitation et qui ne concernent aucunement le contenu. Bien entendu, l'en-tête du fichier, une fois définie sa nature, peut contenir un certain nombre d'informations sur le format du fichier, etc. Ainsi, les fichiers graphiques comportent un en-tête de format normalisé comprenant un certain nombre de données définissant les propriétés du fichier (règle de codage, etc.).

Ainsi, quel que soit le système d'exploitation, ce qui représente le contenu d'un document n'est défini que par le nom du fichier qui peut être relativement court [12 + 3 caractères dans le cas du système "Windows" 3.1 (marque déposée)] ou relativement long [jusqu'à 125 caractères environ dans le cas du système "Windows 95" (marque déposée)]. Compte tenu de ce nombre d'octets relativement important du nom de fichier, il serait évidemment possible de définir à l'intérieur de ce segment de 125 octets une structure de données permettant de connaître un certain nombre d'informations. Dans ce cas, la simple connaissance du nom de fichier pourrait donner un certain nombre d'informations relatives au fichier lui-même. Cependant, la fonction de nom de fichier et la fonction de contenu d'informations ne sont pas séparées et il n'est donc pas possible en réalité, à moins de coder spécialement chaque programme d'application, de tirer des informations utilisables pour la mise en oeuvre du programme d'application lui-même.

Il existe cependant, dans des systèmes d'exploitation connus, une structure qui permet un classement des informations d'après leur contenu. Ces systèmes d'exploitation comprennent un "gestionnaire de fichiers" qui constitue une structure de classement. Par exemple, il est d'usage de classer les documents formés dans tel ou tel contexte, avec tel ou tel programme d'application, etc. dans des répertoires, sous-répertoires, etc. dont l'accès peut être éventuellement autorisé ou non à tel ou tel opérateur.

Les problèmes précités de manque d'informations se posent en particulier dans le domaine de la gestion électronique de documents qu'on considère maintenant à titre d'application. Dans leur forme la plus élaborée, les systèmes de gestion électronique de documents comprennent essentiellement une base de documents, qui comprend simplement les supports des documents (fichiers informatiques), une base d'index de recherche qui est un type de programme gestionnaire de base de données, et un ou plusieurs programmes d'application permettant au moins la lecture des documents et parfois la création de nouveaux documents. En particulier, le programme de gestion de base de données est destiné à donner accès à des documents en fonction de leur contenu qui a été déterminé suivant des critères, souvent à l'aide de mots-clés.

Dans ces systèmes de gestion électronique de documents, les transferts d'informations du type concerné ne sont utiles que lors de la création de nouveaux documents étant donné que, pour la consultation d'un document, on utilise le programme gestionnaire de base de données qui, en fonction de ses critères de sélection, donne accès au document, et ne lui transfère pas d'informations. Par contre, dans un programme d'application de gestion électronique de données, il peut être intéressant d'échanger des documents avec la base de documents et la base d'index de recherche. Un procédé de transfert d'informations du type décrit dans le document précité EP-380 211 peut alors être mis en oeuvre par exemple.

Le document EP-A-0 273 435 décrit un système informatique de gestion de bureau dans lequel divers programmes d'application peuvent être mis en oeuvre par plusieurs ordinateurs par utilisation d'un système gestionnaire de bases de données utilisé pour la création et la gestion de bases de données, et par utilisation de programmes d'application qui forment ensemble un outil de travail coordonné pour un groupe de personnes. Le document EP-A-0 438 020 décrit un système de distribution de dossiers électroniques qui peut être utilisé sur plusieurs ordinateurs et qui comporte un programme distributeur qui gère une base de données de dossiers électroniques contenus dans une mémoire de masse. Les utilisateurs peuvent mettre à jour, supprimer et déplacer vers d'autres utilisateurs ou applications des dossiers ou ensembles de dossiers.

Les systèmes décrits dans ces deux documents ne se prêtent aucunement à une gestion "sans support spécifique", c'est-à-dire une gestion dans laquelle il est essentiel que tous les documents soient pris en compte par un programme distributeur, quel que soit le programme d'application avec lequel ils ont été réalisés, et sans qu'un programme d'application quelconque puisse par exemple détruire des pièces en dehors du système géré par le programme distributeur.

En conséquence, compte tenu de l'état actuel de la technique, la mise en oeuvre de systèmes du type décrit nécessite, dans le cadre d'un système d'exploitation, la mise en oeuvre de plusieurs programmes d'application et, lorsque des informations doivent être échangées, la mise en oeuvre d'un programme distributeur permettant l'échange des informations. Il est donc nécessaire d'utiliser concurremment, dans le cadre d'un système d'exploitation, au moins trois programmes fonctionnant successivement ou simultanément : deux programmes d'application qui échangent les informations et un programme distributeur. Bien entendu, lorsque les transferts d'informations sont fréquents et toujours de même type, ils peuvent être programmés pour être réalisés directement d'un programme d'application à un autre, sans utilisation du programme distributeur, mais ces transferts sont alors extrêmement rigides puisqu'ils doivent avoir été programmés au préalable et faire partie des programmes d'application. Les informations échangées sont mises sous un format compatible avec le système d'exploitation pour que celui-ci joue le rôle du programme distributeur entre les applications. Un exemple simple est notamment l'échange d'informations à travers le "presse-papier" qui existe dans un grand nombre de systèmes d'exploitation d'ordinateur.

En fait, on s'est rendu compte selon l'invention que les informations échangées entre divers programmes d'application sont le plus souvent des informations de types extrêmement restreints. En conséquence, si la désignation d'un document comporte aussi l'association d'un certain nombre d'informations de ces types restreints, un grand nombre de transferts d'informations devient superflu.

On considère un exemple illustrant la remarque précédente, dans le cas du système d'exploitation "Windows" (marque déposée). L'identification d'un fichier comprend une date (date de création), le plus souvent saisie automatiquement, mais qui peut être modifiée, un nom de fichier qui doit être saisi par l'opérateur, et qui représente en général, sous une forme synthétique, un élément d'information relatif au contenu informatif du document, un emplacement dans le système de fichiers (répertoires et sous-répertoires) choisi par l'utilisateur, le plus souvent d'après l'emplacement auquel il travaille, et éventuellement d'autres attributs. Lorsque l'utilisateur a ainsi saisi les critères relatifs à ce fichier, un tiers peut difficilement savoir ce que contient le document représenté par ce fichier informatique.

Si au contraire, comme dans le procédé de l'invention, le nom de fichier correspond à un résumé en quelques mots du contenu du document, si en outre, au moins un nom de personne (physique ou morale), en général un destinataire ou un expéditeur, est associé au nom de fichier avec une date représentant une arrivée ou un départ de document, compte tenu de l'emplacement du fichier (répertoire, sous-répertoire), un tiers peut rapidement savoir quel est l'essentiel du document, et cette connaissance, relativement superficielle, soit évite la consultation de documents manifestement inutiles, soit au contraire permet un accès très rapide au document voulu, sans recherche dans une base de données relationnelles à l'aide de critères spécifiés (mots-clés).

L'invention concerne ainsi un tel système, c'est-à-dire un système dans lequel des données définissant un "document" comportent un certain nombre d'informations relatives à ce document, ces informations étant au moins une date, un nom et un message, un nom de répertoire ou sous-répertoire particulier et, d'une manière qui n'a pas à apparaître, un "nom de fichier informatique" qui peut être un simple numéro dans une liste qui ne contient pas de numéros identiques. Bien entendu, d'autres informations peuvent être utiles, par exemple le fait qu'il s'agit d'un document reçu ou expédié dans le cadre d'une gestion, un nom de créateur du document, une autre date, etc., mais toutes les informations supplémentaires introduites peuvent nécessiter une saisie supplémentaire et ne présenter qu'un intérêt limité.

De préférence, les données précitées de "nom-date-message" correspondent aux écritures utilisées depuis des décennies dans les cahiers d'enregistrement du courrier des entreprises ; ainsi, le système est accessible à tout le personnel d'un service, d'une entreprise ou d'une association, car ce personnel peut s'adapter facilement au maniement des documents selon l'invention qui sont accessibles simplement par ces données de "nom-date-message".

En conséquence, l'invention concerne la gestion des transferts d'informations entre des programmes d'application, d'une manière telle que seuls les transferts véritablement utiles sont exécutés. Lorsqu'un document est introduit à partir de l'extérieur, il est évidemment nécessaire de saisir un nom, un message et éventuellement une date (qui peut être considérée automatiquement comme la date du jour). Cependant, avant qu'un document ne soit créé ou pendant sa création, le nom et le message associé sont définis, de préférence avec le nom de l'outil informatique (c'est-à-dire le programme d'application) qui doit être ou est utilisé pour la création du document et qui reçoit donc ces informations.

Dans un système selon l'invention, le "programme distributeur" du document précité contient donc un certain nombre d'informations de base qui peuvent être directement transmises, sans avoir à provenir d'un autre programme d'application. Ces informations sous incorporées à une base de données et représentent la plus grande partie des informations nécessaires aux programmes d'application.

Le rôle du programme distributeur est avantageusement rempli directement par le système d'exploitation mis en oeuvre sur l'ordinateur. Dans ce cas, il peut s'agir soit d'un véritable système d'exploitation qui appelle des programmes d'application lorsque des documents doivent être réalisés avec tel ou tel programme d'application, soit d'un système d'exploitation "complexe" dans lequel un programme "distributeur", qui gère les désignations des documents selon l'invention, appelle des programmes d'application en leur transmettant des informations et en recevant éventuellement des informations de ceux-ci, et les classe pour conserver les informations qui peuvent être transmises éventuellement à d'autres programmes d'application. Dans ce dernier cas, on a une structure dans laquelle le programme distributeur forme une "surcouche" par rapport au système d'exploitation de base de l'ordinateur, d'une manière un peu analogue à la situation dans laquelle le programme "Windows" 3.1 (marque déposée) constitue une "surcouche" par rapport au système d'exploitation "MS-DOS" (marque déposée).

Ainsi, selon l'invention et grâce au programme distributeur, le "gestionnaire de fichiers" des systèmes d'exploitation connus est remplacé par un véritable "gestionnaire de base de données" de type particulier qui associe des données de sa base à chaque document.

### Exposé de l'invention

Plus précisément, l'invention concerne un procédé d'exploitation d'un ou plusieurs ordinateurs tel que défini par la revendication 1.

Les revendications 2 à 16 définissent des modes de réalisation préférés du dit procédé.

### Description détaillée de l'invention

L'invention convient particulièrement bien à un ensemble de gestion d'informations dans lequel des représentations de contenus informatifs sont gérés sous forme d'"éléments" qui comprennent d'une part une représentation d'un contenu informatif associé à un identificateur, et d'autre part des données d'élément qui comprennent au moins un nom, une date et un message donnant des informations sur le contenu informatif. Un tel ensemble de gestion peut être utilisé "sans aucun support spécifique", c'est-à-dire sans aucun support papier ("paperless"). En effet, les documents reçus sur support papier sont lus optiquement et mis sous forme d'images graphiques, et les documents émis sur papier sont simplement une copie sur support papier d'un document existant dans le système de gestion d'informations. Le support n'est utilisé que pour les échanges avec l'extérieur, lorsque les partenaires à l'échange expédient ou doivent recevoir les représentations sur support papier.

De préférence, la base de données comporte en outre une table de qualités dans laquelle un enregistrement comporte au moins une référence à un nom de personne, une référence à un nom d'ensemble et une qualité désignant le rôle joué par ladite personne dans ledit ensemble. Par exemple, si l'ensemble (dossier) correspond à une transaction commerciale, la qualité associée à un nom dans cet ensemble peut être "fournisseur", "payeur", etc. Bien entendu, un même nom peut être associé à plusieurs qualités (par exemple donneur d'ordre et payeur). Dans un autre ensemble, le même nom peut être associé à d'autres qualités. L'association d'une qualité à un nom s'effectue de préférence par sélection par un organe de pointage dans une liste de qualités affichée sur un écran.

Ainsi, selon l'invention, le procédé d'exploitation d'un ordinateur est du type qui met en oeuvre un programme distributeur constituant un gestionnaire d'entités informatiques classées en ensembles (par exemple des dossiers) et en sous-ensembles (par exemple des chemises), et à partir duquel des programmes d'application (par exemple, un programme de traitement de texte, un programme de dessin, un tableur, un programme d'émission de télécopie, un programme d'établissement de formulaires, etc.) peuvent être appelés et exécutés.

Ce procédé la création, dans une mémoire de masse d'ordinateur, d'une base de données comprenant au moins une table de noms de personne, une table d'ensembles (par exemple des dossiers), de préférence une table de sous-ensembles (par exemple des chemises) qui appartiennent chacun à au moins un ensemble, et une table de documents qui appartiennent chacun à au moins un sous-ensemble. La mémoire de masse appartient à l'ordinateur concerné lorsqu'il est seul, ou à un tel ordinateur ou à un ou plusieurs autres ordinateurs lorsque l'ordinateur concerné est en réseau.

L'exécution, sur l'ordinateur, du programme distributeur gestionnaire de ladite base de données permet la création, la mise à jour, la restitution, le déplacement et la suppression au moins des documents. Cette opération d'exécution, sur un ordinateur, du programme gestionnaire de la base de données, comprend de préférence trois étapes pour la création d'un document.

La première étape comprend la formation, par le programme distributeur gestionnaire de la base de données, de données de documents par association d'au moins un nom de la table de noms, d'au moins une date et d'au moins un message, avec éventuellement désignation d'un programme d'application. Cette étape est de préférence exécutée par "saisie" de chacune des données, cette saisie comprenant soit la saisie directe d'informations avec un clavier, de préférence dans un champ affiché sur l'écran d'affichage de l'ordinateur, soit par sélection par pointage dans une liste affichée à l'aide d'un organe de pointage (tel qu'une souris), soit automatiquement.

La seconde étape, de préférence mais non obligatoirement postérieure à la première, comprend la formation par un programme d'application (qui est celui qui a été désigné éventuellement dans la première étape) d'une représentation d'un contenu informatif (contenu du document, par exemple sous forme d'un texte, d'une image, etc.), ce contenu informatif étant accessible par un identificateur associé à un programme d'application (qui n'est pas forcément le programme d'application utilisé pour la création de ce contenu, étant donné la compatibilité de certains formats avec plusieurs programmes d'application, comme indiqué au début du présent mémoire). Cette étape comprend donc l'affichage d'une fenêtre du programme d'application, et la création du contenu informatif spécifique avec les accessoires informatiques classiques (clavier, souris, etc.), soit à partir d'un contenu vide, soit à partir d'un contenu déjà partiellement ou totalement créé à l'aide des données de document. Par exemple, si le contenu doit être un texte, la fenêtre ouverte dans le programme d'application peut déjà contenir une adresse correspondant au nom de personne des données de document, un en-tête contenant des données de l'ensemble ou dossier, et éventuellement un corps de document tel qu'une lettre-type, etc.

La troisième étape, postérieure aux deux précédentes, c'est-à-dire exécutée lorsque les données de documents ont été formées et lorsqu'une représentation du contenu informatif a été créée, comprend l'association, par le programme distributeur gestionnaire, des données de document et de l'identificateur de ladite représentation, et l'enregistrement des données de documents et de l'identificateur dans la table de documents au moins. Cette étape est de préférence réalisée automatiquement par l'ordinateur, lorsqu'une commande indique que la création du contenu informatif est terminé.

Pour qu'un procédé selon l'invention puisse être utilisé pour la gestion globale sans support spécifique ("paperless") d'une entité telle qu'un service, une entreprise ou une association, il convient que les programmes d'application qui peuvent être appelés par le programme distributeur permettent la création de l'intégralité des documents créés par ce service, cette entreprise ou cette association. Cependant, il n'existe aucun outil qui permettent la création de formulaires complétés indépendamment du formulaire. Il existe des programmes paramétrés pour compléter tel ou tel type de formulaire, mais pas n'importe quel type de formulaire. Chaque fois qu'un nouveau type de formulaire doit être complété, il faut programmer les paramètres qui le constituent. En pratique, il n'existe aucun programme permettant de compléter un formulaire quelconque, si bien que certains formulaires doivent être créés en dehors du système de la base de données et risquent de ne pas être incorporés à celui-ci en cas d'oubli. Un tel risque est inacceptable dans la gestion d'un système sans support spécifique.

Pour cette raison, l'invention concerne aussi un procédé d'établissement de formulaires, pouvant constituer un programme d'application pour la mise en oeuvre du procédé précité d'exploitation dans le cadre d'une gestion sans support spécifique, mais qui peut aussi être indépendant de ce procédé d'exploitation ; ce procédé est du type dans lequel un formulaire vierge a des champs qui doivent être complétés au moins en partie et qui sont répartis sur la surface d'une ou plusieurs pages. Dans une première phase, une image du formulaire vierge est formée par lecture optique et elle est mémorisée sous forme d'une image. Dans une seconde phase, l'image du formulaire est affichée, et pour au moins un champ à compléter, un curseur est placé, avec un outil de pointage, sur l'image à l'emplacement du champ à compléter et un champ de saisie est créé à l'emplacement du curseur. Des données peuvent alors être saisies dans ce champ de saisie avec un clavier par exemple, ou par introduction de données de la base de données. Lorsque tous les champs de saisie voulus ont été créés et renseignés, les données saisies dans ces champs sont imprimées sur un exemplaire du formulaire vierge, à l'exclusion de l'image du formulaire vierge. De préférence, le document qui est conservé comme document de la base de données a un contenu informatif constitué par une image unique comprenant à la fois l'image du formulaire vierge et les données saisies. Dans une variante, les données saisies dans un champ au moins sont des données graphiques, par exemple de dessin.

Lorsque le formulaire est en un seul exemplaire, l'impression est réalisée de préférence par une imprimante sans impact. Lorsque le formulaire est en liasse, l'impression comprend de préférence l'utilisation d'une imprimante à aiguilles. Lorsque le procédé est mis en oeuvre sur des ordinateurs reliés en réseau, l'imprimante ou les imprimantes sont de préférence des imprimantes accessibles par l'intermédiaire du réseau.

Bien entendu, les champs à compléter dans des formulaires peuvent être référencés par rapport à des données de la base de données. Ainsi, des données peuvent être introduites directement dans des champs depuis la base de données. A l'inverse, des données saisies dans des champs peuvent être transmises à la base de données. Ces procédures sont connues des hommes du métier et il n'est donc pas nécessaire de les décrire plus en détail.

De préférence la base de données gère aussi des informations d'échéances contenues dans la table de documents ou dans au moins une table spécifique d'échéances. Le programme distributeur demande et/ou propose l'association d'une échéance (date, message, nom de responsable, etc.) au document créé.

On a décrit ce procédé pour la création d'un document seul, mais il peut être aussi utilisé pour la création de plusieurs documents, groupés dans une "enveloppe" ou plusieurs. Les documents d'une enveloppe ont en commun un certain nombre de données d'enveloppe avantageusement contenues dans une "table d'enveloppes" de la base de données.

Lorsque le procédé est mis en oeuvre sur un seul ordinateur, la base de données est placée dans une mémoire de masse de cet ordinateur et le programme distributeur peut avoir accès directement à la base de données. Cependant, lorsque la base de données est disposée sur un autre ordinateur, le programme distributeur du premier ordinateur échange des données avec l'autre ordinateur comportant la base de données. Ainsi, lorsque plusieurs ordinateurs sont reliés en réseau et l'ordinateur concerné ne contient pas la base de données, le programme distributeur exécuté sur le premier ordinateur n'est pas véritablement le gestionnaire de la base de données, mais est un programme intermédiaire, qui travaille en coopération avec un programme distributeur exécuté sur l'autre ordinateur qui travaille avec sa base de données, par exemple un gestionnaire de requêtes ("SQL"). Cette disposition peut d'ailleurs aussi être utilisée dans un ordinateur isolé. Elle est couverte par l'expression "programme distributeur gestionnaire de base de données" des revendications.

Lorsque le procédé est mis en oeuvre sur l'un de plusieurs ordinateurs reliés en réseau, la base de données peut comporter plusieurs bases de données de structures compatibles, associées logiquement en une seule base de données à laquelle accède le programme distributeur de chaque ordinateur exécutant le procédé. Cette association logique est déjà connue et utilisée par des programmes de gestion de bases de données.

De préférence, les opérations de création, de déplacement, de copie et de suppression de documents sont effectuées uniquement par le programme distributeur. Les programmes d'application ne permettent que la modification des contenus informatifs des documents.

Dans un mode de réalisation avantageux, le programme distributeur est exécuté directement par le système d'exploitation mis en oeuvre sur l'ordinateur. Il faut alors que l'ordinateur reçoive, soit automatiquement au démarrage ou peu après, soit ultérieurement par saisie par l'opérateur, une identification du programme de la base de données avec laquelle travaille le programme distributeur.

L'invention concerne donc un procédé d'exploitation d'ordinateur qui remplit toutes les conditions nécessaires à une gestion sans support spécifique. Ces conditions sont essentiellement les suivantes :
- il faut que la création de tous les documents s'effectue entièrement à l'intérieur du système, car une incorporation ultérieure pourrait être oubliée, et, en conséquence, il faut que les programmes d'application permettent la création effective de l'intégralité des documents qui doivent être créés, même de formulaires de format, couleur et disposition quelconques,
- il faut que la création de documents s'effectue dans un contexte associé à des données de la base de données, ces données étant essentiellement des données de nom, avec une qualité au moins, de date et de message, et
- il faut que le système soit accessible à tout le personnel d'un service, d'une entreprise ou d'une association, et que ce personnel puisse s'adapter facilement au maniement des documents électroniques ; selon l'invention, les documents sont accessibles sous forme de données de "nom-date-message" qui correspondent aux écritures utilisées depuis des décennies dans les cahiers d'enregistrement du courrier des entreprises, et les ensembles (dossiers) et sous-ensembles (chemises) peuvent avoir sur un écran une forme rappelant celle de dossiers, de chemises, de classeurs, etc. auxquels est habitué l'ensemble du personnel et entre lesquels le déplacement des documents est intuitif.

On n'a pas indiqué l'architecture du système avec lequel l'invention est mise en oeuvre, car de nombreuses architectures conviennent. Bien qu'elle puisse être mise en oeuvre sur un seul poste, l'invention est surtout avantageuse dans le cas de plusieurs postes. Bien que la base de données puisse être simplement de type partagé, elle est avantageusement de type client-serveur, c'est-à-dire qu'un serveur de base de données effectue une partie de traitement (par exemple la préparation des "ensembles") et les postes une autre partie. Dans ce contexte, certains postes peuvent être déportés et avoir par exemple accès à un serveur de base de données à travers un réseau public ou privé de communications (réseau téléphonique, réseau "Internet"). Cependant, il est aussi avantageux que le procédé soit mis en oeuvre dans des réseaux d'entreprise qui utilisent des ressources disponibles par accès à un tel réseau public ou privé de communications, avec des procédures convenables de sécurisation et de protection (réseau "Intranet"). Selon l'invention, deux modes complémentaires peuvent être utilisés : l'accès du programme distributeur au serveur de base de données à travers le réseau de communications, et l'accès à des ressources connectées à ce réseau par les programmes d'application qui créent des documents.

Ainsi, l'invention présente de nombreux avantages. Les principaux sont l'accroissement de la vitesse de travail, obtenue grâce à l'accès rapide aux documents voulus (aspect "sans support spécifique") et à la suppression de la plupart des échanges de données entre les programmes d'application (aspect de traitement informatique), et la sécurité de traitement obtenue grâce à la gestion centralisée et unique de tous les fichiers et notamment de toutes les échéances (cohérence de base de données).

Il est bien entendu que l'invention n'a été décrite et représentée qu'à titre d'exemple préférentiel et qu'on pourra apporter toute équivalence technique dans ses éléments constitutifs sans pour autant sortir de son cadre.

### Possibilités d'application industrielle

Le procédé selon l'invention est utile pour la transmission et l'échange d'informations et de documents entre des programmes d'ordinateur et, ainsi, entre les personnes qui utilisent ces programmes d'ordinateur.

## Revendications

1. Procédé d'exploitation d'un ou plusieurs ordinateurs, destiné à être utilisé dans un système de gestion globale sans support spécifique d'une entité, du type qui met en oeuvre un programme distributeur à partir duquel des programmes d'application peuvent être appelés et exécutés, **caractérisé en ce que** qu'il comprend :
- la création, dans une mémoire de masse d'au moins un ordinateur, d'une base de données comprenant au moins une table de noms de personnes, une table d'ensembles, et une table de documents qui appartiennent chacun à au moins un ensemble, et
- l'exécution, sur au moins un ordinateur, du programme distributeur gestionnaire de ladite base de données qui est destiné à assurer la création, la restitution, le déplacement et la suppression au moins des documents, chaque document étant formé par association de données de documents elles-mêmes formées par association d'au moins un nom de la table de noms, d'au moins une date et d'au moins un message, avec l'identificateur d'une représentation d'un contenu informatif du document, et l'enregistrement, par le programme distributeur, des données de documents et de l'identificateur dans la table de documents au moins,
et **en ce que**
les opérations de déplacement, de copie et de suppression de documents sont effectuées par le programme distributeur, et les programmes d'application n'assurent que la modification des contenus informatifs de documents, si bien que la création des documents s'effectue à l'intérieur du système de gestion globale sans support spécifique,
le système de gestion globale sans support spécifique est accessible à l'ensemble du personnel de l'entité, les données de documents correspondant aux écritures habituellement utilisées dans les entreprises, et les ensembles contenant les documents correspondant aux dossiers auxquels est habitué le personnel et entre lesquels le déplacement des documents est intuitif, et
la création, par le personnel de l'entité, de l'intégralité des documents à l'aide des programmes d'application qui sont appelés par le programme distributeur, de sorte que l'accès aux documents voulus est rapide.

2. Procédé selon la revendication 1, **caractérisé en ce que** la base de données comprend aussi une table de sous-ensembles qui appartiennent chacun à au moins un ensemble, et les documents sont présentés dans des ensembles et sous-ensembles qui correspondent respectivement aux dossiers et chemises auxquels est habitué le personnel.

3. Procédé selon l'une des revendications 1 et 2, **caractérisé en ce que** chaque ensemble comporte un sous-ensemble de transfert normalement vide, mais qui contient transitoirement les documents destinés à d'autres sous-ensembles de l'ensemble concerné.

4. Procédé selon l'une quelconque des revendications 1 à 3, **caractérisé en ce que** la base de données contient un ensemble de transfert normalement vide, mais qui contient transitoirement les documents destinés à d'autres ensembles lorsque l'ensemble destinataire n'a pas été identifié.

5. Procédé selon l'une quelconque des revendications précédentes, mis en oeuvre sur l'un de plusieurs ordinateurs reliés en réseau, **caractérisé en ce que** la base de données comporte plusieurs bases de données de structures compatibles, associées logiquement en une seule base de données à laquelle accède le programme distributeur.

6. Procédé selon l'une quelconque des revendications précédentes, **caractérisé en ce que** l'étape de création, dans une mémoire de masse d'ordinateur, d'une base de données comprend en outre la création d'une table de qualités dans laquelle un enregistrement comporte au moins une référence à un nom de personne, une référence à un nom d'ensemble et une qualité désignant le rôle joué par ladite personne dans ledit ensemble.

7. Procédé selon l'une quelconque des revendications précédentes, **caractérisé en ce que** le programme distributeur est exécuté directement par le système d'exploitation mis en oeuvre sur l'ordinateur.

8. Procédé selon l'une quelconque des revendications précédentes, dans lequel la base de données contient des informations d'échéance contenues dans la table de documents ou une table spécifique d'échéances, **caractérisé en ce qu'**il comprend en outre l'association de données d'échéance aux données de document.

9. Procédé selon l'une quelconque des revendications précédentes, **caractérisé en ce qu'**il est mis en oeuvre dans un réseau d'entreprise qui utilise des ressources disponibles par accès à un réseau de communications, ayant des procédures de sécurisation et de protection.

10. Procédé selon l'une quelconque des revendications précédentes, **caractérisé en ce que** les documents reçus sur support papier sont intégrés au système par lecture optique sous forme d'images graphiques du contenu informatif, et chaque document qui doit être émis sur papier est une copie sur support papier du contenu informatif d'un document existant dans le système.

11. Procédé selon l'une quelconque des revendications précédentes, **caractérisé en ce qu'**un programme d'application est un programme qui met en oeuvre un procédé d'établissement de formulaires, du type dans lequel un formulaire vierge a des champs à compléter au moins en partie, ces champs à compléter étant répartis à la surface d'une ou plusieurs pages, **caractérisé en ce qu'**il comprend les étapes suivantes :
- l'affichage d'une image du formulaire, et
- au moins un groupe d'opérations comprenant
- le positionnement, sur l'image du formulaire, d'un curseur par rapport à l'image d'un champ à compléter et la création d'un champ de saisie à l'emplacement du curseur, afin que le champ de saisie corresponde à l'emplacement d'un champ à compléter, et
- la saisie de données dans ce champ de saisie, puis
- l'impression, sur un exemplaire du formulaire vierge, des données saisies par ledit groupe d'opérations au moins, afin que ces données saisies soient imprimées audit emplacement du champ à compléter, et sans impression de l'image du formulaire vierge.

12. Procédé selon la revendication 11, **caractérisé en ce qu'**il comprend, dans une phase initiale,
- la formation d'une image du formulaire vierge par lecture optique, et
- la mémorisation de l'image obtenue.

13. Procédé selon l'une des revendications 11 et 12, **caractérisé en ce qu'**il comprend aussi la conservation d'une image unique comprenant à la fois l'image du formulaire vierge et les données saisies, sous forme d'une seule image.

14. Procédé selon l'une quelconque des revendications 11 à 13, **caractérisé en ce que** des données sont saisies dans un champ de saisie par introduction directe de données provenant d'une base de données.

15. Procédé selon l'une quelconque des revendications 11 à 14, **caractérisé en ce que** des données saisies dans un champ de saisie sont transmises à une base de données.

16. Procédé selon l'une quelconque des revendications 11 à 15, **caractérisé en ce que**, lorsque tous les champs de saisie voulus ont été créés et renseignés, les données saisies dans ces champs sont imprimées sur un exemplaire du formulaire vierge, à l'exclusion de l'image du formulaire vierge.

## Claims

1. A method of operating one or several computers, to be used in a global paperless organization office management system, being of the type implementing a distributor program constituting a manager program from which application programs can be called and run, and **characterized in that** it includes :
- creating, in a computer mass memory of at least one computer, a database comprising at least a person name table, a set table, and a table of documents each of which belongs to at least one set, and
- running, on at least a computer, the distributor program for managing the database and organized at least to create, to update, to retrieve, to move, and to delete documents, each document being formed by associating, by the manager program, of document data which are formed by associating at least one name from the name table, at least one date and at least one message, with an identifier of a representation of the information content of the document, and storing by the distributor program of the document data and the identifier in at least the document table,
and **in that**
the operations of moving, copying, and deleting documents are performed by the distributor program, the application programs serving only to modify the information contents of documents, so that documents are created within the global paperless management system,
the global paperless management system is accessible by all of the staff of the organization, document data corresponding to entries typically used in businesses, and the sets containing documents corresponding to dossiers familiar to the staff and between which the movement of documents is intuitive, and
- all documents are created by the organization staff with application programs which are called by the distributor program, so that desired document access is fast.

2. A method according to claim 1, **characterized in that** the database also includes a subset table, each subset belonging to at least one set, and documents are presented in sets and subsets corresponding respectively to dossiers and folders familiar to all of the staff.

3. A method according to any of claims 1 and 2, **characterized in that** each set has a normally empty transfer subset, which subset temporarily contains documents provided for other subsets of the set concerned.

4. A method according to any of claims 1 to 3, **characterized in that** the database contains a normally empty transfer set, which temporarily contains documents provided for other sets when the destination set has not yet been identified.

5. A method according to any preceding claims, implemented on one of a plurality of computers connected in a net, **characterized in that** the database has a plurality of databases of compatible structures that are logically associated in a single database accessed by the distributor program.

6. A method according to any preceding claim, **characterized in that** the step of creating a database in a computer mass memory further comprises creating a table of capacities in which a record includes at least a reference to a person name, a reference to a set name, and a capacity specifying the role played by the person in the set.

7. A method according to any preceding claim, **characterized in that** the distributor program is run directly by the operating system implemented on the computer.

8. A method according to any preceding claim, in which the database contains diary information contained in the document table or in a special diary table, the method being **characterized in that** it further comprises associating diary data with document data.

9. A method according to any preceding claim, **characterized in that** it is implemented in a business network using resources that are available by accessing a communications network, with appropriate security and protection procedures.

10. A method according to any preceding claim, **characterized in that** documents received on paper are integrated into the system by optically reading graphic images of information content, and each document issued on paper is merely a copy on paper of the information content of a document existing in the system.

11. A method according to any preceding claim, **characterized in that** an application program is a program for implementing a method of filling in forms, of the type in which a blank form has fields to be filled in, at least in part, which fields are distributed over the surface of one or more pages, and **characterized in that** it comprises the following steps :
- displaying image of the form, and
- at least one group of operations comprising :
- positioning, on the form image, a cursor in relation to the image of a field to be filled in and creating an input field at the location of the cursor, such that the input field corresponds to the location of the field to be filled in, and
- inputting data in the input field, then
- printing, on a paper copy of the blank form, the data input by the at least one group of operations, so that input data are printed at the location of the field to be filled in, and while not printing the image of the blank form.

12. A method according to claim 11, **characterized in that** it comprises, in a first stage :
- forming an image of the blank form by optical scanning, and
- storing the resulting image.

13. A method according to any of claims 11 and 12, **characterized in that** it also comprises storing a single image comprising the image both of the blank form and of the data that has been input, as a single image.

14. A method according to any of claims 11 to 13, **characterized in that** data are input in an input field by direct insertion of data from a database.

15. A method according to any of claims 11 to 14, **characterized in that** data input into an input field are transmitted to a database.

16. A method according to any of claims 11 to 15, **characterized in that**, when all of the desired input fields have been created and filled in, the data input into the fields is printed on a blank form on paper, omitting the image of the blank form itself.

## Patentansprüche

1. Verfahren zum Betrieb eines oder mehrerer Rechner, das in einem System mit gemeinsamer Steuerung ohne spezielle Unterstützung einer Einheit verwendet werden soll und bei dem ein Verteilerprogramm verwendet wird, von dem aus Anwendungsprogramme aufgerufen und ausgeführt werden können, **gekennzeichnet durch** folgende Verfahrensschritte:
- Erstellen einer Datenbank in einem Massenspeicher wenigstens eines Rechners, die wenigstens eine Tabelle mit Personennamen, eine Tabelle mit Gruppennamen und eine Tabelle mit Dokumenten enthält, von denen jede zu wenigstens einer Gruppe gehört,
- Ausführen des Verteilersteuerprogramms der Datenbank auf wenigstens einem Rechner, das das Erstellen, Wiederherstellen, Verschieben und Unterdrücken zumindest von Dokumenten mit dem Identifizierer einer Darstellung eines Informationsinhaltes des Dokuments gewährleisten soll, wobei jedes Dokument **durch** Verbinden von Dokumentendaten gebildet wird, die wiederum **durch** Verbinden wenigstens eines Namens aus der Namenstabelle, wenigstens eines Datums und wenigstens einer Nachricht gebildet werden, und Aufzeichnen von Dokumenten- und Identifikatordaten in wenigstens einer Dokumententabelle **durch** das Verteilerprogramm,
und **gekennzeichnet dadurch, daß**
- das Verschieben, Kopieren und Unterdrücken von Dokumenten durch das Verteilerprogramm ausgeführt wird, und die Anwendungsprogramme lediglich gewährleisten, daß die Informationsinhalte der Dokumente modifiziert werden, so daß das Erstellen von Dokumenten im Innern des gemeinsamen Steuerungssystems ohne spezielle Unterstützung ausgeführt wird,
- die Personalgruppe der Einheit ohne spezielle Unterstützung auf das gemeinsame Steuerungssystem zugreifen kann, wobei die Dokumentendaten den üblicherweise in den Betrieben verwendeten Schriftbildern entsprechen und wobei die Gruppen die Dokumente enthalten, die den dem Personal geläufigen Unterlagen entsprechen und zwischen denen das Verschieben von Dokumenten intuitiv ist, und
- die vollständigen Dokumente durch das Personal des Unternehmens mit Hilfe von Anwendungsprogrammen erstellt werden, die durch das Verteilerprogramm aufgerufen werden, so daß ein schneller Zugriff auf die gewünschten Dokumente ermöglicht wird.

2. Verfahren nach Anspruch 1, **dadurch gekennzeichnet, daß** die Datenbank auch eine Tabelle von Untergruppen enthält, von denen jede zu wenigstens einer Gruppe gehört, und die Dokumente in Gruppen und Untergruppen dargestellt werden, die jeweils Unterlagen und Akten entsprechen, die dem Personal geläufig sind.

3. Verfahren nach einem der Ansprüche 1 und 2, **dadurch gekennzeichnet, daß** jede Gruppe eine Untergruppe mit normalerweise leerer Übertragung aufweist, die jedoch vorübergehend die Dokumente enthält, die für andere Untergruppen der betreffenden Gruppe bestimmt sind.

4. Verfahren nach einem der Ansprüche 1 bis 3, **dadurch gekennzeichnet, daß** die Datenbank eine Gruppe mit normalerweise leerer Übertragung aufweist, die jedoch vorübergehend die Dokumente enthält, die für andere Gruppen bestimmt sind, wenn die Zielgruppe nicht ermittelt werden konnte.

5. Verfahren nach einem der vorhergehenden Ansprüche, das bei einem der Vielzahl von Rechnern verwendet wird, die durch ein Netzwerk miteinander verbunden sind, **dadurch gekennzeichnet, daß** die Datenbank aus mehreren kompatiblen Datenbanken besteht, die logisch mit nur einer Datenbank verbunden sind, auf die das Verteilerprogramm zugreift.

6. Verfahren nach einem der vorhergehenden Ansprüche, **dadurch gekennzeichnet, daß** im Massenspeicher des Rechners das Erstellen einer Datenbank ferner die Erstellung einer Wertetabelle enthält, in der ein Eintrag wenigstens einen Bezug auf den Namen einer Person, einen Bezug auf den Namen einer Gruppe und einen Wert enthält, der die Rolle dieser Person bezeichnet, die diese in der Gruppe spielt.

7. Verfahren nach einem der vorhergehenden Ansprüche, **dadurch gekennzeichnet, daß** das Verteilerprogramm direkt durch das auf dem Computer verwendete Betriebssystem ausgeführt wird.

8. Verfahren nach einem der vorhergehenden Ansprüche, bei dem die Datenbank in der Dokumententabelle enthaltene Verfallsinformationen aufweist oder eine spezielle Tabelle mit Verfallsdaten, **dadurch gekennzeichnet, daß** sie ferner das Verbinden von Verfallsdaten mit den Daten eines Dokuments beinhaltet.

9. Verfahren nach einem der vorhergehenden Ansprüche, **dadurch gekennzeichnet, daß** es im Netzwerk eines Unternehmens Verwendung findet, das verfügbare Hilfsmittel für den Zugriff auf ein Kommunikationsnetz verwendet, welches Verfahren zur Sicherung und zum Schutz der Daten enthält.

10. Verfahren nach einem der vorhergehenden Ansprüche, **dadurch gekennzeichnet, daß** die auf Papier vorliegenden Dokumente durch optisches Einlesen in Form von Informationen enthaltenden, graphischen Darstellungen in das System integriert werden, und jedes Dokument, das auf Papier ausgegeben werden muß, ist eine auf Papier vorliegende Kopie des Informationsinhalts eines im System existierenden Dokuments.

11. Verfahren nach einem der vorhergehenden Ansprüche, **dadurch gekennzeichnet, daß** ein Anwendungsprogramm ein Programm ist, das ein Verfahren zur Formularherstellung enthält, bei dem ein unbeschriebenes Formular Felder aufweist, die wenigstens teilweise ausgefüllt werden sollen, wobei diese auszufüllenden Felder auf der Oberfläche einer oder mehrerer Seiten verteilt wurden, **dadurch gekennzeichnet, daß** es die folgenden Verfahrensschritte enthält:
- Anzeigen eines Formularbildes und
- wenigstens eine Gruppe von Arbeitsschritten, enthaltend
- Positionieren eines Cursors auf dem Formularbild in bezug auf das Bild eines zu vervollstindigenden Feldes und Erzeugen eines Erfassungsfeldes an der Stelle, an der der Cursor steht, damit das Erfassungsfeld der Stelle entspricht, an der das zu vervollständige Feld steht, und
- Erfassen von Daten in diesem Erfassungsfeld,
- Drucken der erfaßten Daten auf ein Exemplar des unbeschriebenen Formulars durch die betreffende Arbeitsgruppe, damit diese erfaßten Daten an die Stelle des zu vervollständigenden Feldes gedruckt werden, und ohne Drucken des Bildes des unbeschriebenen Formulars.

12. Verfahren nach Anspruch 11, **dadurch gekennzeichnet, daß** es in einer Anfangsphase folgende Verfahrensschritte enthält:
- Erzeugen eines Bildes eines unbeschriebenen Formulars durch optisches Einlesen, und
- Speichern des erzeugten Bildes.

13. Verfahren nach einem der Ansprüche 11 und 12, **dadurch gekennzeichnet, daß** es ferner ein gespeichertes einheitliches Bild besitzt, welches gleichzeitig das Bild des unbeschriebenen Formulars und die erfaßten Daten enthält und so ein einziges Bild bildet.

14. Verfahren nach einem der Ansprüche 11 bis 13, **dadurch gekennzeichnet, daß** Daten in einem Erfassungsfeld erfaßt werden, um die von einer Datenbank kommenden Daten direkt einzuspeisen.

15. Verfahren nach einem der Ansprüche 11 bis 14, **dadurch gekennzeichnet, daß** erfaßte Daten in einem Erfassungsfeld zu einer Datenbank übertragen werden.

16. Verfahren nach einem der Ansprüche 11 bis 15, **dadurch gekennzeichnet, daß** die erfaßten Daten in diesen Feldern unter Ausschluß des Bildes des unbeschriebenen Formulars auf ein unbeschriebenes Exemplar eines Formulars gedruckt werden, wenn alle gewünschten Erfassungsfelder erstellt und angesprochen wurden.
